# EUROPÄISCHE PATENTANMELDUNG

(11) **EP 1 127 839 A1**
(43) Veröffentlichungstag der Anmeldung: **29.08.2001**
(21) Anmeldenummer: 00128077.5
(22) Anmeldetag: 21.12.2000
(51) Int. Cl.: C01B 15/029

(54) **Verfahren zur Herstellung von Wasserstoffperoxid durch Direktsynthese und Edelmetallkatalysator hierfür**

(30) Priorität: 26.02.2000 DE 10009187
(71) Anmelder: Degussa AG, 40474 Düsseldorf (DE)
(72) Erfinder: Bertsch-Frank, Birgit, Dr., 42329 Wuppertal (DE); Hemme, Ina, Dr., 63450 Hanau (DE); Rollmann, Jürgen, 63762 Pflaumheim (DE); Katusic, Stipan, 65779 Kelkheim (DE); Balduf, Torsten, Dr., 63456 Hanau (DE); Becker, Catrin, 65929 Frankfurt (DE); Wildner, Werner, Dr., 63500 Seligenstadt (DE); Schütte, Rüdiger, Dr., 63755 Alzenau (DE)

(57) **Zusammenfassung**

Die Erfindung betrifft ein Verfahren zur Herstellung von Wasserstoffperoxid durch Direktsynthese, wobei Wasserstoff und Sauerstoff in Gegenwart eines heterogenen mindestens ein Edelmetall enthaltenden trägerfreien oder trägergebundenen Katalysators in Anwesenheit oder Abwesenheit eines Lösungsmittels umgesetzt werden, und einen Katalysator zur Durchführung des Verfahrens.

Der Einsatz eines Halogenidpromotors und/oder einer Mineralsäure lässt sich vermeiden, indem ein Edelmetallkatalysator verwendet wird, welcher eine anorganische Jodverbindung in einer Menge entsprechend 0,01 bis 15 Gew.-% Jod, bezogen auf den Edelmetallgehalt, enthält.

## Beschreibung

Die Erfindung betrifft ein Verfahren zur Herstellung von Wasserstoffperoxid durch Direktsynthese aus Wasserstoff und Sauerstoff in Gegenwart eines heterogenen, mindestens ein Edelmetall, insbesondere Palladium, und einen Promotor enthaltenden Katalysators in An- oder Abwesenheit eines Lösungsmittels. Durch Verwendung eines erfindungsgemäßen Katalysators erübrigt sich der kontinuierliche Einsatz eines Halogenidpromotors in einer wässrigen oder gasförmigen Reaktionsphase. Die Erfindung richtet sich ferner auf einen zur Durchführung des Verfahrens geeigneten Katalysator.

Die direkte Synthese von Wasserstoffperoxid durch Umsetzung von Wasserstoff mit Sauerstoff in einem sauren wäßrigen Medium in Gegenwart eines Edelmetall-Trägerkatalysators, wie Pd auf Aktivkohle oder andere Pd und/oder Pt enthaltende heterogene Katalysatoren, ist aus verschiedenen Dokumenten bekannt - beispielhaft wird auf die EP-B 0 274 830 verwiesen. Bei dem in diesem Dokument beschriebenen Verfahren wird ein wäßriges Reaktionsmedium eingesetzt, das zum Zwecke der Inhibierung der Zersetzung von gebildetem Wasserstoffperoxid eine Mineralsäure enthält. Durch den Zusatz eines Bromid-Promotors wird die Selektivität erhöht. Diesem Verfahren haften verschiedene Probleme an, darunter eine zu niedrige Selektivität und/oder eine zu geringe erreichbare H₂O₂-Konzentration und/oder eine niedrige Raum-Zeit-Ausbeute, teilweise auch ein hoher Katalysatoraustrag, wodurch der technische Aufwand zur Rückgewinnung des Katalysators zunimmt und die H₂-Selektivität mit zunehmender Standzeit abnimmt. Ein weiteres Problem besteht darin, aus der gewonnenen wässrigen Wasserstoffperoxidlösung die Säure und den Promotor abtrennen zu müssen, um zu verkaufsfähiger H₂O₂-Lösung zu gelangen.

Im Verfahren gemäß EP-A 0 366 419 wird ein H₂ und O₂ enthaltendes Gasgemisch über ein in einem Rieselbettreaktor angeordnetes Katalysatorbett geleitet, während gleichzeitig im Gleichstrom eine H₂SO₄ und HCl enthaltende wäßrige Phase über das Katalysatorbett rieselt. Zwar wird bei diesem Verfahren unter Verwendung eines auf einem hydrophoben Träger gebundenen Edelmetallkatalysators unter den üblichen Druck- und Temperaturbedingungen eine hohe Selektivität erzielt, dieser steht aber als Nachteil einer sehr niedrigen H₂O₂-Konzentration (0,15 bis 0,3 %) entgegen. Zu dem erforderlichen Aufwand für die Konzentrierung kommt auch der Aufwand, HCl und H₂SO₄ aus der wässrigen H₂O₂-Lösung abzutrennen.

Ein ähnliches Rieselbettverfahren lehrt die EP-A 0 579 109: Durch Einhaltung eines bestimmten Volumenverhältnisses der Gasphase zur Flüssigphase wird eine hohe Selektivität erzielt. Durch Beladung des Reaktionsgasgemisches mit Wasserdampf gemäß WO 99/52820 werden Lösungen mit hoher H₂O₂-Konzentration zugänglich. Auch in diesen Verfahren werden bromid- und schwefelsäurehaltige H₂O₂-Lösungen erhalten.

Durch Verwendung eines eine Palladium/Goldlegierung enthaltenden Katalysators konnten gemäß DE-A 41 27 918 zwar die Säure- und Bromid-Einsatzkonzentration im flüssigen Reaktionsmedium erniedrigt werden, dennoch mussten beide Komponenten anwesend sein.

Im Verfahren gemäß EP-B 0 504 741 enthält das flüssige Reaktionsmedium einen halogenhaltigen Aktivator und ggf. zusätzlich einen Stabilisator für Wasserstoffperoxid, jedoch keine Säure. In diesem Fall befindet sich der Edelmetallkatalysator auf einem festen Supersäure-Träger.

Die EP-B 0 492 064 lehrt dagegen eine Direktsynthese ohne kontinuierliche Zugabe einer Säure und eines Bromid-Promotors zu einem wässrigen Reaktionsmedium. Dies gelingt durch Verwendung eines Platingruppenmetallkatalysators auf einem halogenierten Harz, wie einem bromierten Styrol-Divinylbenzol-Copolymeren. Das wässrige Reaktionsmedium kann einen üblichen Stabilisator für Wasserstoffperoxid enthalten.

Eine Alternative zum Verfahren der EP-B 0 492 064 lehrt die EP-B 0 498 166: Hier enthält der metallische oder trägergebundene Katalysator eine in Wasser unlösliche organische Chlor-, Brom- oder Jodverbindung, wie Brom- oder Jodbenzol, oder eine an das Trägermaterial, wie SiO₂, gebundene Chloralkylsilanverbindung. Das wässrige Reaktionsmedium ist wiederum frei von starken Säuren und Promotoren und enthält vorzugsweise nur einen Stabilisator für Wasserstoffperoxid in üblicher Konzentration.

Aufgabe der Erfindung ist die Bereitstellung eines weiteren Verfahrens zur Direktsynthese von Wasserstoffperoxid in Gegenwart eines jodhaltigen Edelmetallkatalysators, ohne dem wässrigen Reaktionsmedium oder Reaktionsgas eine Mineralsäure und/oder einen Halogenidpromotor zuführen zu müssen. Eine weitere Aufgabe richtet sich auf die Bereitstellung eines Edelmetallkatalysators, der für die genannte Synthese geeignet ist, sowie auf ein Verfahren zur Herstellung des erfindungsgemäß zu verwendenden Katalysators.

Diese und weitere sich aus der Beschreibung ergebenden Aufgaben werden durch das erfindungsgemäße Verfahren zur Herstellung von Wasserstoffperoxid und die erfindungsgemäßen jodhaltigen Edelmetallkatalysatoren und Verfahren zu ihrer Herstellung gemäß den Hauptansprüchen gelöst.

Gegenstand der Erfindung ist demgemäß ein Verfahren zur Herstellung von Wasserstoffperoxid durch Direktsynthese, wobei Wasserstoff und Sauerstoff in Gegenwart eines heterogenen mindestens ein Edelmetall und eine Jodverbindung enthaltenden trägerfreien oder trägergebundenen Katalysators in Anwesenheit oder Abwesenheit eines Lösungsmittels umgesetzt werden, das dadurch gekennzeichnet ist, dass man einen eine anorganische Jodverbindung enthaltenden Katalysator mit einem Jodgehalt im Bereich von 0,01 bis 15 Gew.-%, bezogen auf den Edelmetallgehalt, verwendet.

Der zur Durchführung der H₂O₂-Direktsynthese geeignete erfindungsgemäße trägerfreie oder trägergebundene Edelmetallkatalysator, enthaltend mindestens ein Edelmetall und eine Jodverbindung, ist gekennzeichnet durch einen Gehalt an einer anorganischen Jodverbindung in einer Menge entsprechend einem Jodgehalt von 0,01 bis 15 Gew.-%, bezogen auf den Edelmetallgehalt. Die Unteransprüche zum Verfahren der Direktsynthese und zum hierfür eingesetzten Katalysator richten sich auf spezielle und bevorzugte Ausführungsformen.

Der erfindungsgemäße Katalysator liegt im allgemeinen in Form von Katalysatorpartikeln vor (= trägerfrei), wobei die Katalysatorpartikel auch an einem üblichen Träger gebunden sein können. Die katalytisch wirksame Komponente enthält ein oder mehrere Edelmetalle in reiner Form oder in Form von Legierungen. Bevorzugte Edelmetalle sind die Platinmetalle, insbesondere Palladium und Platin, sowie Gold und Silber. Ganz besonders bevorzugt enthalten die Katalysatorpartikel mindestens 80 Gew.-% Palladium, 0 bis 15 Gew.-% Gold und/oder 0 bis 15 Gew.-% Platin und 0 bis 5 Gew.-% Silber in legierter oder unlegierter Form sowie ein Jodid eines oder mehrerer der Elemente aus der Reihe Pd, Pt, Au und Ag in einer Menge von 0,1 bis 10 Gew.-% Jod.

Erfindungswesentlicher Bestandteil des Katalysators ist die Anwesenheit einer anorganischen Jodverbindung, welche sich auf den Partikeln aus Edelmetall oder einer Edelmetalllegierung befindet oder/und vorzugsweise in diesen gleichförmig oder oberflächennah eingebaut ist. Zweckmäßigerweise ist die Jodverbindung in Wasser oder einem für die Direktsynthese eingesetzten wässrigen Reaktionsmedium wenig löslich oder vorzugsweise im wesentlichen unlöslich. Unter den wenig bis unlöslichen Jodverbindungen sind Edelmetalljodide bevorzugt. Wie sich aus ESR-Spektren ergab, sind unter den besonders bevorzugt anwesenden Palladiumjodiden außer PdJ₂ auch Palladiumjodide mit anderem Pd/J-Verhältnis katalytisch wirksam. Offensichtlich nehmen die im Katalysator gebundenen anorganischen Jodverbindungen die Funktion eines Promotors ein.

Der Jodgehalt kann zwar im Bereich von 0,01 bis 15.Gew.-%, bezogen auf den Edelmetallgehalt, liegen, bevorzugt ist aber ein Jodgehalt im Bereich von 0,1 bis 10 Gew.-%. Für den hier betrachteten Zweck, also die Direktsynthese von H₂O₂, sind trägerfreie jodhaltige Edelmetallkatalysatoren, deren Herstellung bevorzugt eine Sprüh- oder Flammenpyrolyse umfasst, sowie in-situ oder in üblicher Weise nachträglich an Träger gebundene jodhaltige Edelmetallkatalysatoren geeignet. Träger sind beispielsweise Aktivkohle, Metalloxide, wie SiO₂, Al₂O₃, ZrO₂, TiO₂, und Silikate, darunter besonders solche mit Zeolithstruktur.

Gemäß einer bevorzugten Ausführungsform wird ein Katalysator verwendet, der hergestellt wurde durch ein Sprüh- oder Flammenpyrolyseverfahren, umfassend (i) Erzeugen eines gasgetragenen Partikelkollektivs, enthaltend in den Partikeln eine oder mehrere Komponenten aus der Reihe einer Verbindung des mindestens einen Edelmetalls und einer Jodverbindung, (ii) Pyrolysieren des Partikelkollektivs in einem Sprüh- oder Flammenpyrolysereaktor bei einer Temperatur von 500 bis 1500 °C, (iii) Abtrennen der gebildeten Feststoffpartikel vom Gasstrom und bei Bedarf (iv) Imprägnieren eines üblichen Katalysatorträgers mit nach (i) bis (iii) hergestellten Katalysatorpartikeln.

Die trägergebundenen Katalysatoren können erhalten worden sein durch eine in-situ Erzeugung des Trägermaterials zusammen mit der Applikation des/der Edelmetalle und Jodverbindung oder in an sich bekannter Weise, wobei ein Trägermaterial mit Partikeln der katalytisch wirksamen jodhaltigen Edelmetallsysteme imprägniert und bei Bedarf mittels eines Bindemittels fixiert wird. Die Verwendung oder in-situ Erzeugung eines oxidischen oder silikatischen Trägermaterials wird bevorzugt. Besonders geeignet sind stark saure Träger, wie Molekularsiebe vom ZSM-Typ.

Die Direktsynthese zur Herstellung von H₂O₂ kann in unterschiedlicher Weise ausgeführt werden. Diesbezüglich wird auf den einleitend zitierten und gewürdigten Stand der Technik verwiesen. Der Katalysator kann als Suspensionskatalysator, vorzugsweise als Festbettkatalysator, zum Einsatz gelangen. Zum Zwecke des Einsatzes des erfindungsgemäßen Katalysators als Festbettkatalysator wird dieser in bekannter Weise in geeignete Formlinge, wie Tabletten, Granulate, Extrudate und dgl. überführt. Ein Festbettkatalysator wird bevorzugt in Rieselbettfahrweise betrieben, indem ein wässriges Reaktionsmedium im Gleich- oder Gegenstrom zu einem Wasserstoff und Sauerstoff enthaltenden Gasgemisch über das Festbett rieselt. Alternativ wird dem Festbettreaktor ein Wasserdampf gesättigtes H₂ und O₂ enthaltendes Gasgemisch oben zugeführt, und erst im unteren Teil des Reaktors kommt es zur Kondensation einer wässrigen H₂O₂-Lösung. Das Volumenverhältnis des Gasstroms zur zugeführten oder am Boden des Reaktors entnommenen Flüssigkeit kann in weiten Grenzen liegen; dies folgt aus den Ausführungsformen gemäß EP-A 0 579 109 und WO 99/52820, deren Offenbarungsinhalt in die vorliegende Beschreibung einbezogen wird.

Anders als in vielen vorbekannten Verfahren werden einem im erfindungsgemäßen Verfahren eingesetzten wässrigen Reaktionsmedium kein Halogenid-Promotor und, von ggf. sauren H₂O₂-Stabilisatoren abgesehen, keine Mineralsäure zugesetzt. Zweckmäßig ist es, dem Medium einen oder mehrere übliche Stabilisatoren für Wasserstoffperoxid in üblicher Menge, also in einer Gesamtmenge von weniger als 1000 mg/l, insbesondere weniger als 500 mg/l, zuzusetzen. Geeignete Stabilisatoren sind zum Beispiel Phosphate, Pyrophosphate, Phosphonate, deren zugrundeliegende Säuren und Stannate.

Die Direktsynthese erfolgt üblicherweise bei etwa 20 °C bis etwa 70 °C, vorzugsweise bei 40 bis 60 °C, bei einem Druck von etwa 0,1 bis 10 MPa, insbesondere 1 bis 5 MPa.

Gemäß einer bevorzugten Ausführungsform umfasst die Herstellung des Katalysators ein Sprüh- oder Flammenpyrolyseverfahren. Die Erzeugung des Partikelkollektivs (= Stufe (i)) erfolgt durch Versprühen einer oder mehrerer Lösungen von Verbindungen der katalysatorbildenden Elemente. Edelmetalle werden bevorzugt in Form der Nitrate eingesetzt, die Jodverbindung in Form von Edelmetalljodiden. Das Versprühen erfolgt bevorzugt unter Aerosolbildung mittels Mehrstoffdüsen oder Ultraschallverneblern. Gemäß einer bevorzugten Ausführung wird das Aerosol vor dem Eintritt in den Reaktor vorgetrocknet. Einzelheiten zur Erzeugung des Aeorols, der Vortrocknung und zum Flammenreaktor sind der DE-OS 195 45 455 und DE-PS 196 47 038 zu entnehmen. Das Aerosol der Jodverbindung kann mit jenem der Edelmetallverbindung(en) ein Partikelkollektiv bilden, oder wird separat dem Reaktor zugeführt, beispielsweise an einer Position mit bereits reduzierter Temperatur, wie 500 bis 800 °C. Die Temperatur im Reaktor liegt bevorzugt im Bereich von 500 bis 1100 °C.

In Analogie zum Sprühpyrolyseverfahren gemäß DE-OS 43 07 333 lassen sich beim Einsatz von Lösungen von Edelmetallverbindungen und einer Jodverbindung anstelle der in diesem Dokument genannten Metallverbindungen feine katalysatorwirksame Partikel gewinnen.

Zur Herstellung trägergebundener Katalysatoren mit einem oxidischen oder silikatischen Katalysator enthält das gasgetragene Partikelkollektiv zusätzlich die zur Bildung des Trägers erforderliche eine oder mehrere Vorstufen in Form einer in einem Lösungsmittel löslichen Form. Bezüglich der Details zur Durchführung des Verfahrens der Herstellung des Katalysators wird auf die DE-OS 196 47 038 verwiesen, wobei sich das erfindungsgemäße Verfahren von dem vorbekannten Verfahren dadurch unterscheidet, dass zusätzlich eine Lösung einer Jodverbindung separat oder zusammen mit anderen Bestandteilen des Systems in Sprühtröpfchen bzw. ein Aerosol überführt wird und damit Bestandteil des dem Reaktor zugeführten Partikelkollektivs wird.

Auf die bevorzugte Herstellung der erfindungsgemäß zu verwendenden neuen Katalysatoren, umfassend ein Flammenpyrolyseverfahren, wurde zuvor eingegangen. Gemäß einer weiteren Ausführungsform werden zunächst mittels eines Sprüh- oder Flammenpyrolyseverfahrens trägerfreie oder trägergebundene jodfreie Edelmetallpartikel erzeugt. Die Jodierung erfolgt dann in einer nachgeschalteten Stufe durch Kontaktieren mit einer Jodidlösung, wie einer Alkali-oder Edelmetalljodidlösung, bei Raumtemperatur oder insbesondere erhöhter Temperatur, wie 40 bis 90 °C. Überraschenderweise baut sich Jodid aus zum Beispiel Natriumjodid in die Edelmetallpartikel ein, und mittels ESR lässt sich die Bildung eines Edelmetalljodids nachweisen. Nach dem Kontaktieren wird nicht gebundenes Jodid ausgewaschen.

Vorteile der Erfindung sind die Verwendbarkeit und hohe Wirksamkeit der neuen jodhaltigen Edelmetallkatalysatoren bei der Direktsynthese von Wasserstoffperoxid. Der Einsatz eines Promotors und/oder einer Mineralsäure sind damit vermeidbar. Die Katalysatoren lassen sich in einfacher Weise und in Analogie zu vorbekannten Edelmetallpulvern oder Edelmetallpartikel enthaltenden oxidischen oder silikatischen Trägerkatalysatoren dadurch gewinnen, dass zusätzlich eine Jodverbindung zum Einsatz kommt, und zwar im Rahmen eines Sprüh- oder Flammenpyrolyseverfahrens oder durch einfache Nachbehandlung jodfreier Edelmetallpartikel mit einer Jodidlösung.

Die Erfindung wird anhand der nachfolgenden Beispiele zur Herstellung der Katalysatoren und zur Verwendung derselben in der Direktsynthese zur H₂O₂-Herstellung weiter verdeutlicht.

### Beispiele zur Herstellung der katalytisch wirksamen Komponente

### Herstellvariante 1 (Stand der Technik):

Eine wäßrige Lösung der/des Edelmetallsalze/s, insbesondere der Chloride oder Nitrate in einer Gesamtkonzentration von ca. 2,5 bis 10 Gew.-% wird mittels Ultraschallzerstäuber, Ultraschall-Aerosolgenerator oder Zweistoffdüse zerstäubt. Die entstandenen Tropfen werden mit Hilfe eines Trägergases in den Reaktor geführt.

Reaktorlänge: 1000 mm, mittlere Weite: 125 mm, Aerosoldüse im Reaktor: d = 46 mm, H₂-Ringdüse von 52 bis 54 mm, Luft-Ringdüse von 61 auf 80 mm. Der Reaktor enthält 3 Temperaturmeßsonden. Als Brennergas wird H₂ verwendet (H₂-Luft Flamme: Tₘₐₓ = 2045 °C).

Für die Darstellung der Legierungen liegen die Temperaturen im Reaktor noch unterhalb des Schmelzpunktes dieser Produkte im Temperaturbereich von 900 bis 1100 °C am Meßpunkt 1. Danach kann die Temperatur im Flammenreaktor bis zum Meßpunkt 3 bis auf 600 °C absinken.

Beim Einsatz des Ultraschall-Aerosolgenerators wird das Aerosol mit dem Trägergas durch eine Tröpfchenfalle geführt, und die Tropfen mit einem Durchmesser >10 um werden rezykliert. Danach gelangt das Aerosol in eine Vortrocknung, in der es thermisch behandelt wird, wobei die Temperatur zwischen 80 und 300 °C liegt und die Verweilzeit zwischen 1 und 20 Sekunden beträgt.

Das im Reaktor entstandene Produkt wird mittels Filter vom Gasstrom abgetrennt.

### Herstellvariante 2:

Hier wird nach dem gleichen Verfahren wie Herstellvariante 1 mittels eines Ultraschall-Aerosolgenerators ein Aerosol hergestellt; direkt hinter der Tröpfchenfalle befindet sich in der Vortrocknungsstrecke eine Öffnung, durch die mit Hilfe einer weiteren Zerstäubungseinheit eine anorganische Jodverbindung, vorzugsweise eine Edelmetalljodverbindung, mit Hilfe von Trägergas zugeführt wird. Die wäßrige Lösung der Jodverbindung wird so dosiert, dass der gewünschte prozentuale Anteil an Jod in den Katalysatorpartikeln erreicht wird. Die weitere Reaktion entspricht Herstellverfahren 1.

### Herstellvariante 3:

Hier werden eine Zweistoffdüse oder ein Ultraschallzerstäuber eingesetzt; um eine Jodverbindung auf das Edelmetall aufzubringen, wird ca. 15 cm unterhalb des Reaktoreingangs eine Zerstäubungseinheit angeschlossen, durch die die entsprechende Salzlösung zugeführt wird. Das weitere Verfahren ist wie im Herstellverfahren 1.

### Herstellvariante 4:

Variante 1 wird so verändert, dass Edelmetallsalz/e und die entsprechende/n Jodverbindung/en gemeinsam gelöst und vernebelt oder zerstäubt werden. Das weitere Verfahren ist entsprechend Herstellverfahren 1.

### Herstellvariante 5:

Hier wird auf ein nach Variante 1 hergestellter Katalysator mit einer jodidhaltigen Lösung behandelt.

Herstellung trägergebundener Katalysatoren (allgemeine Vorschrift).

Zum Aufbringen auf den Träger werden die Edelmetallpulver in einer Lösung (H₂O, org. Lösungsmittel) suspendiert; danach wird ein Formkörper aus einem oxidischen Trägermaterial imprägniert. Zum Verdampfen des Lösungsmittels wird der imprägnierte Formkörper in einem Ofen zuerst 2 Stunden bei 150 °C und dann eine weitere Stunde bei 300 °C erhitzt; soweit angegeben, wird kalziniert. Das Trägermaterial lag in Form eines kugelförmigen Granulats mit einem Korndurchmesser im Bereich von im wesentlich 0,15 bis 0,25 mm vor.

### Vergleichsbeispiel 1

Herstellung eines nicht-erfindungsgemäßen Pd/Pt-Katalysators nach Variante 1

Einsatzlösung: Nitrat-saure Pd- und Pt-haltige wäßrige Lösung (pH = 1-3); Edelmetallgehalt 6 Gew.-%, davon 0,6 Gew.-% Pt und 5,4 Gew.-% Pd.

| Verfahrensparameter: | |
|---|---|
| Temperatur Vortrocknung | 150 °C |
| Brenngas (H₂) | 1600 l/h |
| Gesamtgasmenge | 4300 l/h Reaktorgas + |
| Lambda (O₂ / H₂) | 1200 l/h Quenchgas 1,4 |
| Pulverzusammensetzung | 10 Gew.-% Pt; 90 Gew.-% Pd |
| Mittlere Korngröße (Cilas d₅₀) | 0,45 µm |
| BET-Oberfläche (m²/g) | 2,1 |

### Beispiel 1

Einsatzlösungen: Nitrat-saure Pd- und Pt-haltige wäßrige Lösung (pH = 1-3); Edelmetallgehalt 6 Gew.-%.

Wäßrige PdJ₂-Lösung; 1 Gew.-%, bezogen auf J₂, die Dosierung wird entsprechend des gewünschten Jodgehaltes eingestellt.

| Verfahrensparameter (Herstellvariante 2): | |
|---|---|
| Temperatur Vortrocknung | 150 °C |
| Brenngas (H₂) | 1400 l/h |
| Gesamtgasmenge | 5400 l/h Reaktorgas |
| Lambda (O₂ / H₂) | 1,4 |
| Pulverzusammensetzung | 10 Gew.-% Pt; 88 Gew.-% Pd; |
| | 2 Gew.-% Jod als PdJ₂ |
| Mittlere Korngröße (Cilas d₅₀) | 1,82 µm |
| BET-Oberfläche (m²/g) | 2,0 |

### Beispiel 2

Einsatzlösungen: Nitrat-saure Pd- und Pt-haltige wäßrige Lösung (pH = 1-3); Edelmetallgehalt 6 Gew.-%.

Wäßrige PdJ₂-Lösung; 0,1 Gew.-%, bezogen auf J₂, die Dosierung wird entsprechend des gewünschten Jodgehaltes eingestellt.

| Verfahrensparameter (Herstellvariante 2) : | |
|---|---|
| Temperatur Vortrocknung | 150 °C |
| Brenngas (H₂) | 1400 l/h |
| Gesamtgasmenge | 5450 l/h Reaktorgas (incl. |
| | Trägergas für beide |
| Lambda (O₂ / H₂) | Verneblungseinheiten) 1,4 |
| Pulverzusammensetzung | 10 Gew.-% Pt; 89,75 Gew.-% Pd; 0,25 Gew.-% Jod als PdJ₂ |
| Mittlere Korngröße (Cilas d₅₀) | 1,2 um |
| BET-Oberfläche (m²/g) | 1,5 (± 0,2) |

### Beispiel 3

Einsatzlösungen: Nitrat-saure Pd- und Pt-haltige wäßrige Lösung (pH = 1-3); Edelmetallgehalt 6 Gew.-%.

Wäßrige PdJ₂-Lösung; 0,4 Gew.-%, bezogen auf J₂, die Dosierung wird entsprechend des gewünschten Jodgehaltes eingestellt.

| Verfahrensparameter (Herstellvariante 2) : | |
|---|---|
| Temperatur Vortrocknung | 150 °C |
| Brenngas (H₂) | 1400 l/h |
| Gesamtgasmenge | 5450 l/h Reaktorgas (incl. Trägergas für beide Verneblungseinheiten) |
| Lambda (O₂ / H₂) | 1,4 |
| Pulverzusammensetzung | 10 Gew.-% Pt; 89 Gew.-% Pd; 1,0 Gew.-% Jod als PdJ₂ |
| Mittlere Korngröße (Cilas d₅₀) | 2,5 µm |
| BET-Oberfläche (m²/g) | 1,1 |

### Beispiel 4

Einsatzlösung: Pd- und Pt-Tetraaminnitratlösungen (pH = 8-10); Gesamt-Edelmetallgehalt: 3,3 Gew.-%.

Einwaage von pulverförmigem PdJ₂, entsprechend der gewünschten Menge Jod.

| Verfahrensparameter (Herstellvariante 2): | |
|---|---|
| Temperatur Vortrocknung | 150 °C |
| Brenngas (H₂) | 1300 l/h |
| Gesamtgasmenge | 5400 l/h Reaktorgas (incl. Trägergas für beide Verneblungseinheiten) |
| Lambda (O₂ / H₂) | 1,5 |
| Pulverzusammensetzung | 10 Gew.-% Pt; 89,9 Gew.-% Pd; |
| | 0,1 Gew.-% Jod als PdJ₂ |
| Mittlere Korngröße (Cilas d₅₀) | 0,83 µm |
| BET-Oberfläche (m²/g) | 3,3 |

### Beispiel 5

Einsatzlösungen: Nitrat-saure Pd- und Pt-haltige wäßrige Lösung (pH = 1-3); Edelmetallgehalt 6 Gew.-%.

Wäßrige PdJ₂-Lösung; 5 Gew.-%, bezogen auf J₂, die Dosierung wird entsprechend des gewünschten Jodgehaltes eingestellt.

| Verfahrensparameter (Herstellvariante 4): | |
|---|---|
| Temperatur Vortrocknung | 200 °C |
| Brenngas (H₂) | 1600 l/h |
| Gesamtgasmenge | 5800 l/h Reaktorgas (incl. Trägergas für beide Verneblungseinheiten) |
| Lambda (O₂ / H₂) | 1,3 |
| Pulverzusammensetzung | 10 Gew.-% Pt; 80 Gew.-% Pd; |
| | 10 Gew.-% Jod als PdJ₂ |
| Mittlere Korngröße (Cilas d₅₀) | 0,89 µm |
| BET-Oberfläche (m²/g) | 2,1 |

### Beispiel 6

Einsatzlösungen: Nitrat-saure Pd-haltige wäßrige Lösung (pH = 1-3); Edelmetallgehalt 5,4 Gew.-%.

Wäßrige PdJ₂-Lösung; 3 Gew.-%, bezogen auf J₂, die Dosierung wird entsprechend des gewünschten Jodgehaltes eingestellt.

| Verfahrensparameter (Herstellvariante 2): | |
|---|---|
| Temperatur Vortrocknung | 200 °C |
| Brenngas (H₂) | 1600 l/h |
| Gesamtgasmenge | 5800 l/h Reaktorgas (incl. Trägergas für beide Verneblungseinheiten) |
| Lambda (O₂ / H₂) | 1,3 |
| Pulverzusammensetzung | 90 Gew.-% Pd; 10 Gew.-% Jod als PdJ₂ |
| Mittlere Korngröße (Cilas d₅₀) | 0,96 µm |
| BET-Oberfläche (m²/g) | 2,2 |

### Beispiel 7

Einsatzlösungen: Nitrat-saure Pd-haltige wäßrige Lösung (pH = 1-3) ; Edelmetallgehalt 5 Gew.-%.

Wäßrige PdJ₂-Lösung; 1 Gew.-%, bezogen auf J₂, die Dosierung wird entsprechend des gewünschten Jodgehaltes eingestellt.

| Verfahrensparameter (Herstellvariante 2): | |
|---|---|
| Temperatur Vortrocknung | 200 °C |
| Brenngas (H₂) | 800 l/h |
| Gesamtgasmenge | 5700 l/h Reaktorgas (incl. Trägergas für beide Verneblungseinheiten) + 1200 l/h Quenchgas |
| Lambda (O₂ / H₂) | 2,9 |
| Pulverzusammensetzung | 98 Gew.-% Pd; 2 Gew.-% Jod als PdJ₂ |
| Mittlere Korngröße (Cilas d₅₀) | 2,82 µm |
| BET-Oberfläche (m²/g) | 1,0 |

### Beispiel 8

Einsatzlösungen: Nitrat-saure Pd-haltige wäßrige Lösung (pH = 1-3); Edelmetallgehalt 5 Gew.-%.

Wäßrige PdJ₂-Lösung; 1 Gew.-%, bezogen auf J₂, die Dosierung wird entsprechend des gewünschten Jodgehaltes eingestellt.

| Verfahrensparameter (Herstellvariante 3) : | |
|---|---|
| Temperatur Vortrocknung | entfällt, da beim Zerstäuber keine Vortrocknung v.h. |
| Brenngas (H₂) | 1600 l/h |
| Gesamtgasmenge | 5500 l/h Reaktorgas (incl. Trägergas für Verneblungs-bzw. Zerstäubungseinheiten) |
| Lambda (O₂ / H₂) | 1,2 |
| Pulverzusammensetzung | 98 Gew.-% Pd; 2 Gew.-% Jod als PdJ₂ |
| Mittlere Korngröße (Cilas d₅₀) | 11,4 µm |

### Beispiel 9

Einsatzlösungen:
1. Nitrat-saure Pd-haltige wäßrige Lösung (pH = 1-3); Edelmetallgehalt 5,2 Gew.-%.
2. Tetrachlorogoldsäure; Edelmetallgehalt 2,5 Gew.-%.

Wäßrige PdJ₂-Lösung; 1 Gew.-%, bezogen auf J₂, die Dosierung wird entsprechend des gewünschten Jodgehaltes eingestellt.

| Verfahrensparameter (Herstellvariante 2): | |
|---|---|
| Temperatur Vortrocknung | 150 °C |
| Brenngas (H₂) | 1300 l/h |
| Gesamtgasmenge | 5000 l/h Reaktorgas (incl. Trägergas für beide Verneblungseinheiten) |
| Lambda (O₂ / H₂) | 1,63 |
| Pulverzusammensetzung | 88 Gew.-% Pd; 10 Gew.-% Au; |
| | 2 Gew.-% Jod als PdJ₂ |
| Mittlere Korngröße (Cilas d₅₀) | 0,96 µm |

### Beispiel 10

a) Herstellung von Pd-Partikeln (analog zu Vergleichsbeispiel 1) Einsatzlösung: Nitrat-saure Pd-haltige wäßrige Lösung (pH = 1-3); Edelmetallgehalt 6 Gew.-%.

| Verfahrensparameter (Herstellvariante 1) : | |
|---|---|
| Temperatur Vortrocknung | 150 °C |
| Brenngas (H₂) | 1600 l/h |
| Gesamtgasmenge | 5500 l/h |
| Lambda (O₂ / H₂) | 1,4 |
| Pulverzusammensetzung | 100 Gew.-% Pd |
| Mittlere Korngröße (Cilas d₅₀) | 0,53 µm |
| BET-Oberfläche (m²/g) | 3 |

b) Dotierung der Pd-Partikel von a) mit Jodid (Herstellvariante 5):

Hierzu werden 5 g Katalysator gemäß Stufe a) auf eine Glasfilterfritte der Porösität D4 gegeben, die Fritte wird auf 50 °C thermostatisiert.

20 Stunden wird der Katalysator mit 150 ml/h einer 50 °C heißen wässrigen Lösung der Konzentration 0,005 N H₃PO₄ / 0,0005 N NaJ überträufelt, so dass der Katalysator gleichmäßig benetzt ist. Anschließend wird der Katalysator mehrmals mit VE-Wasser gespült und danach trockengesaugt.

### Beispiele zur Direktsynthese von H₂O₂

Der nachfolgenden Tabelle sind die Betriebsbedingungen und Ergebnisse zu entnehmen, und zwar für erfindungsgemäße Ausführungsformen (Beispiele 11-21) mit erfindungsgemäßen durch Flammenpyrolyse hergestellten jodhaltigen und zum Vergleich einem jodidfreien Edelmetallkatalysator (Vergleichsbeispiel 3) und einem promotorfreien Reaktionsmedium; in Vergleichsbeispiel 2 wurde ein Bromid und H₂SO₄ enthaltendes Reaktionsmedium eingesetzt.

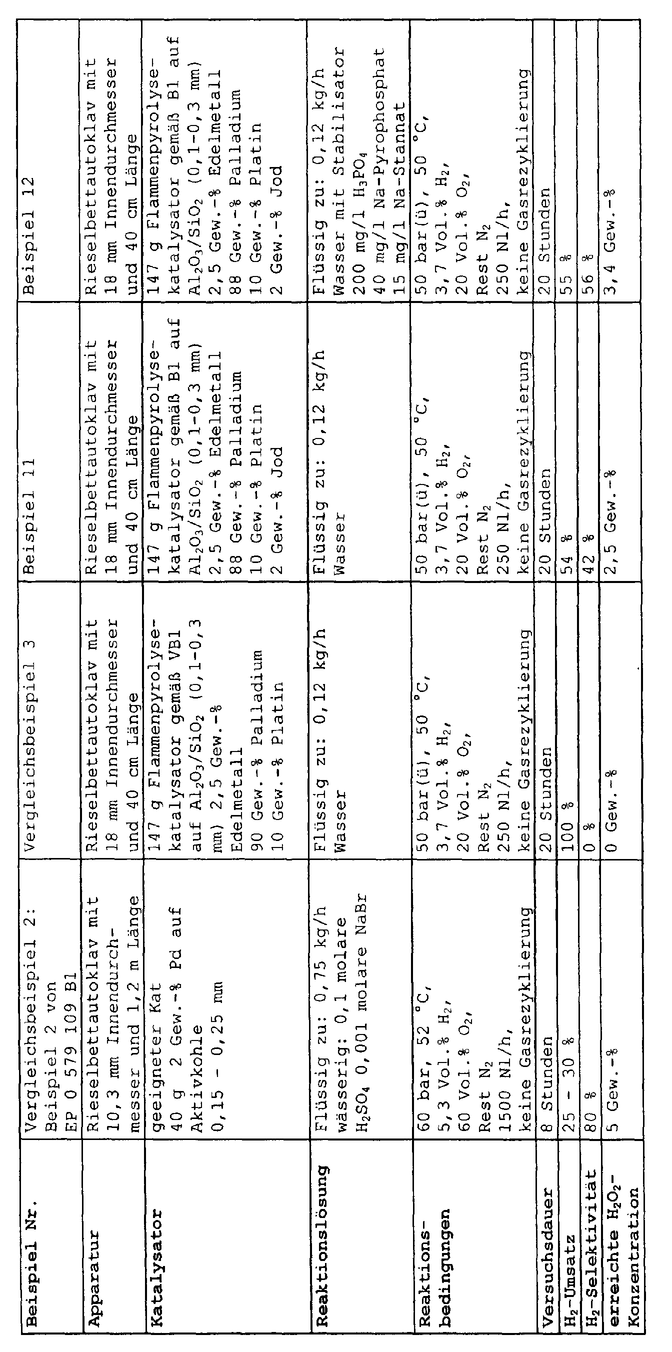

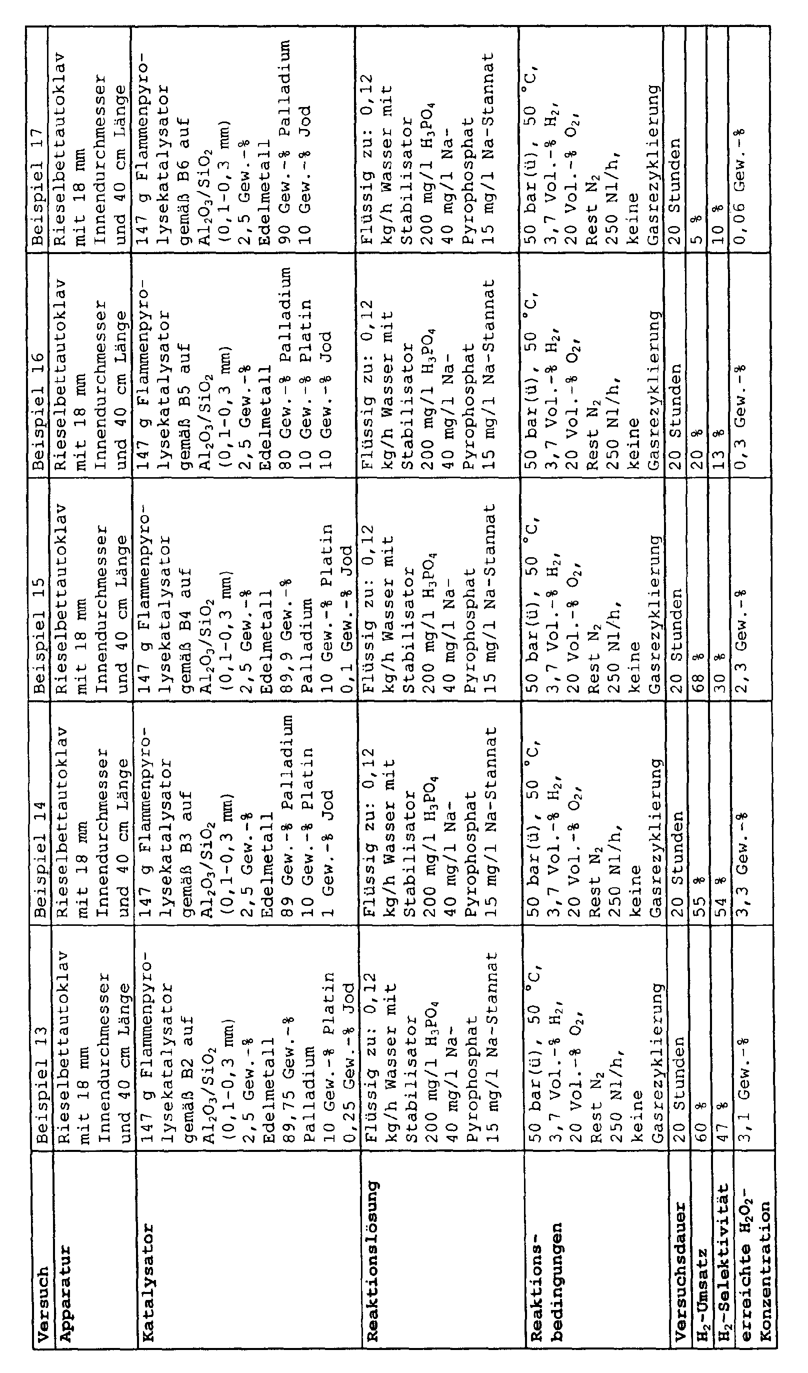

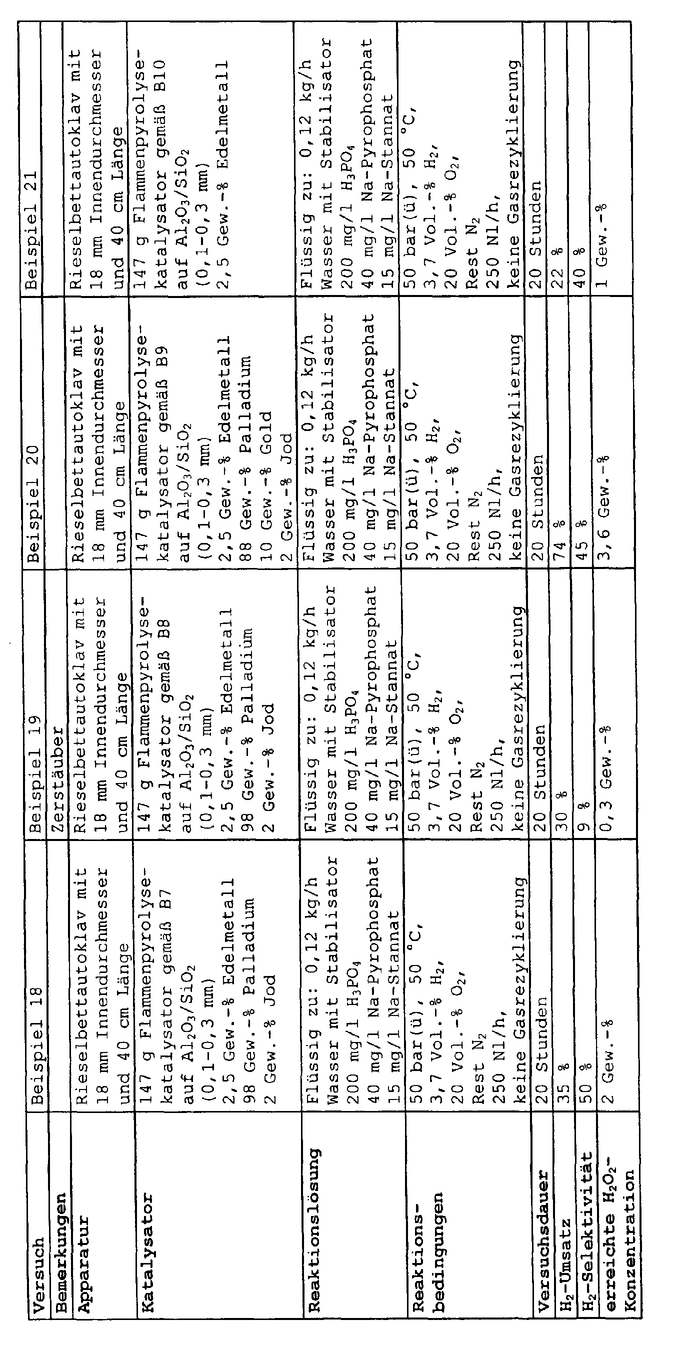

## Patentansprüche

1. Verfahren zur Herstellung von Wasserstoffperoxid durch Direktsynthese, wobei Wasserstoff und Sauerstoff in Gegenwart eines heterogenen mindestens ein Edelmetall und eine Jodverbindung enthaltenden trägerfreien oder trägergebundenen Katalysators in Anwesenheit oder Abwesenheit eines Lösungsmittels umgesetzt werden,
dadurch gekennzeichnet,
dass man einen eine anorganische Jodverbindung enthaltenden Katalysator mit einem Jodgehalt im Bereich von 0,01 bis 15 Gew.-%, bezogen auf den Edelmetallgehalt, verwendet.

2. Verfahren nach Anspruch 1,
dadurch gekennzeichnet,
dass der zu verwendende Katalysator ein oder mehrere Edelmetalle aus der Reihe der Platinmetalle, Silber und Gold, insbesondere Palladium und/oder Platin, in unlegierter oder legierter Form enthält.

3. Verfahren nach Anspruch 1 oder 2,
dadurch gekennzeichnet,
dass der zu verwendende Katalysator als anorganische Jodverbindung ein Edelmetalljodid, insbesondere ein Palladium- und/oder Platinjodid, enthält.

4. Verfahren nach einem der Ansprüche 1 bis 3,
dadurch gekennzeichnet,
dass der zu verwendende Katalysator hergestellt wurde durch ein Sprüh- oder Flammenpyrolyseverfahren, umfassend (i) Erzeugen eines gasgetragenen Partikelkollektivs, enthaltend in den Partikeln eine oder mehrere Komponenten aus der Reihe einer Verbindung des mindestens einen Edelmetalls und einer Jodverbindung, (ii) Pyrolysieren des Partikelkollektivs in einem Sprüh- oder Flammenpyrolysereaktor bei einer Temperatur von 500 bis 1500 °C, (iii) Abtrennen der gebildeten Feststoffpartikel vom Gasstrom und bei Bedarf (iv) Imprägnieren eines üblichen Katalysatorträgers mit nach (i) bis (iii) hergestellten Katalysatorpartikeln.

5. Verfahren nach Anspruch 4,
dadurch gekennzeichnet,
dass das bei der Katalysatorherstellung eingesetzte Partikelkollektiv Palladium- und/oder Platinjodid enthaltende Partikel umfasst.

6. Verfahren nach Anspruch 4 oder 5,
dadurch gekennzeichnet,
dass Partikel des bei der Katalysatorherstellung eingesetzten Partikelkollektivs eine oder mehrere Vorstufen zur Bildung eines oxidischen oder silikatischen Trägermaterials enthalten.

7. Verfahren nach einem der Ansprüche 1 bis 6,
dadurch gekennzeichnet,
dass man einen trägerfreien oder trägerhaltigen Katalysator verwendet, der, bezogen auf trägerfreie Katalysatorpartikel, mindestens 80 Gew.-% Palladium, 0 bis 15 Gew.-% Gold und/oder 0 bis 15 Gew.-% Platin und 0 bis 5 Gew.-% Silber in legierter oder unlegierter Form, und ein Jodid eines oder mehrerer der Elemente aus der Reihe Pd, Pt, Au und Ag enthält, wobei der Jodgehalt des Katalysators 0,1 bis 10 Gew.-% beträgt.

8. Verfahren nach einem der Ansprüche 1 bis 6,
dadurch gekennzeichnet,
dass man die Direktsynthese in einem Rieselbettreaktor durchführt, wobei eine einen Stabilisator für Wasserstoffperoxid enthaltende wässrige Lösung über ein Katalysator-Festbett rieselt.

9. Trägerfreier oder trägergebundener Edelmetallkatalysator, enthaltend mindestens ein Edelmetall und eine Jodverbindung in Katalysatorpartikeln, geeignet zur Direktsynthese von Wasserstoffperoxid nach dem Verfahren gemäß einem der Ansprüche 1 bis 8, gekennzeichnet durch einen Gehalt an einer anorganischen Jodverbindung in einer Menge entsprechend einem Jodgehalt von 0,01 bis 15 Gew.-%, bezogen auf den Edelmetallgehalt.

10. Edelmetallkatalysator nach Anspruch 9,
dadurch gekennzeichnet,
dass er ein oder mehrere Edelmetalle aus der Reihe der Platinmetalle, Silber und Gold, insbesondere Palladium und/oder Platin, in unlegierter oder legierter Form enthält.

11. Edelmetallkatalysator nach Anspruch 9 oder 10,
dadurch gekennzeichnet,
dass er als Jodverbindung ein Edelmetalljodid, insbesondere ein Palladium und/oder Platinjodid, enthält.

12. Edelmetallkatalysator nach einem der Ansprüche 9 bis 11,
dadurch gekennzeichnet,
dass er hergestellt wurde durch ein Sprüh- oder Flammenpyrolyseverfahren, umfassend (i) Erzeugen eines gasgetragenen Partikelkollektivs, enthaltend in den Partikeln eine oder mehrere Komponenten aus der Reihe einer Verbindung des mindestens einen Edelmetalls und einer Jodverbindung, (ii) Pyrolysieren des Partikelkollektiv in einem Sprüh- oder Flammenpyrolysereaktor bei einer Temperatur von 500 bis 1500 °C, (iii) Abtrennen der gebildeten Feststoffpartikel vom Gasstrom und bei Bedarf (iv) Imprägnieren eines üblichen Katalysatorträgers mit nach (i) bis (iii) hergestellten Katalysatorpartikeln.

13. Edelmetallkatalysator nach einem der Ansprüche 9 bis 12,
dadurch gekennzeichnet,
dass er, bezogen auf trägerfreie Katalysatorpartikel, mindestens 80 Gew.-% Palladium, 0 bis 15 Gew.-% Gold und/oder 0 bis 15 Gew.-% Platin und 0 bis 5 Gew.-% Silber in legierter oder unlegierter Form und ein Jodid eines oder mehrerer der Elemente aus der Reihe Pd, Pt, Au und Ag enthält, wobei der Jodgehalt des Katalysators 0,1 bis 10 Gew.-% beträgt.

14. Edelmetallkatalysator nach Anspruch 12,
dadurch gekennzeichnet,
dass bei der Erzeugung des gasgetragenen Partikelkollektivs eine oder mehrere wässrige oder wässrig-organische Lösungen einer oder mehrerer Edelmetallverbindungen und einer Jodverbindung und im Falle einer in-situ Herstellung eines trägergebundenen Katalysators zusätzlich Vorstufe(n) eines oxidischen oder silikatischen Trägermaterials feinst versprüht und bei Bedarf das gebildete Aerosol vorgetrocknet wurde.

15. Trägergebundener Edelmetallkatalysator nach einem der Ansprüche 12 bis 14,
dadurch gekennzeichnet,
dass er hergestellt wurde durch Bindung von in Abwesenheit eines trägerbildenden Materials erzeugten Katalysatorpartikeln an einem üblichen porenförmigen oxidischen oder silikatischen oder Aktivkohle-Trägermaterial.

16. Verfahren nach einem der Ansprüche 1 bis 8,
dadurch gekennzeichnet,
dass man den zu verwendenden Katalysator durch ein Verfahren erzeugt, wobei man einen trägerfreien oder trägergebundenen partikelförmigen Edelmetallkatalysator, enthaltend ein oder mehrere Edelmetalle, mit einer wässrigen Lösung eines Alkalimetall- oder Edelmetalljodids bei 20 bis 90 °C kontaktiert, wobei sich mindestens ein Teil des Jodids an/in die Edelmetallpartikel einlagert, und danach freies Jodid durch Auswaschen entfernt.
